Europäisches Patentamt

European Patent Office

Office européen des brevets

(19)

(11) Publication number: **0 043 392**
**A1**

# EUROPEAN PATENT APPLICATION

(21) Application number: **80302195.5**

(22) Date of filing: **30.06.80**

(51) Int. Cl.³: **G 06 F 15/20**

(43) Date of publication of application: **13.01.82**
Bulletin 82/2

(84) Designated Contracting States: **BE CH DE FR GB IT LI NL SE**

(71) Applicant: **International Business Machines Corporation, Armonk, N.Y. 10504 (US)**

(72) Inventor: **Kerigan, Shaun Carl, 55 Buriton Road, Harestock Winchester Hampshire (GB)**
Inventor: **Brandon, Martin, 24 Keats Close, Winchester Hampshire (GB)**
Inventor: **Solly, David Charles, 1 Terriote Close, Chandlers Ford Eastleigh Hampshire (GB)**
Inventor: **Murchie, David Thomson, 74 Kingsway, Chandlers Ford Eastleigh Hampshire (GB)**

(74) Representative: **Blake, John, IBM United Kingdom Patent Operations Hursley Park, Winchester Hants, S021 2JN (GB)**

(54) Text processing apparatus with direct formatting of text.

(57) A text processing terminal includes a keyboard (10), a display (11), a text store (26) for storing a document in text data stream form including symbolic text characters and text control characters, a keystroke processor (28) and editor (29) which receive keystroke signals from the keyboard (10) and modify the text stream in the text store (26) in accordance therewith, and a direct formatter (30) which formats and maps the stored text stream onto the display (11). The editing process has a higher priority than the formatting process so that the stored text is always at the latest version of the document during editing. A separate cursor control (14) controls the position of the viewed cursor on the display independently of the formatter (30). Preferably the keystroke processor (28), editor (29) and direct formatter (30) are constituted by a single microprocessor.

1

## TEXT PROCESSING APPARATUS WITH DIRECT FORMATTING OF TEXT

The present invention relates to a text processing apparatus in which text is directly formatted onto a display screen.

Modern text processing apparatus comprises a keyboard by means of which an operator can enter, delete or manipulate text (generally known as editing) or text commands including formatting information, and a display screen on which the document being created or revised can be displayed. The document need not be printed until after it has been edited on the screen. As an alternative, a document need not be printed but can be transmitted electronically over a communications link to be viewed or printed at a remote location.

The IBM (Registered Trade Mark) 3730 Distributed Office Communication System exemplifies such a text processing apparatus: it is a so-called shared-logic system in which a number of terminals are connected to a local minicomputer or controller. In the IBM 3730 system, documents are stored (electronically) in permanent storage in the form of a magnetic disk store. When an operator wishes to view a document, the document is placed into working storage assigned to that operator and the document, or part of it, is then sent from working storage in the IBM 3791 controller to the refresh buffer of the IBM 3732 text display terminal. As the operator makes changes to the displayed text, the refresh buffer is changed: thus the screen will display the contents of the refresh buffer. Periodically the contents of the refresh buffer are sent to the controller and the document in working storage is thus updated: normally this occurs when the operator presses an "enter" key on the keyboard. When the document in working storage has been edited to the operator's satisfaction, a store command is used to store the document in permanent storage. There may be one version of the document in permanent storage, a somewhat more up-to-date version in working storage, and an even more up-to-date version displayed on the screen (and in the refresh buffer).

It would clearly be advantageous if there were only a single version of the document and accordingly an object of the present invention is to provide a word processing apparatus in which a single unformatted version of the document is stored which is kept updated at each keystroke. Formatting and mapping to the screen is then a one way process which is performed as required, for example, after each editing action. This separation of the document formatting and editing processes results in significant simplification of both the hardware and the software.

According to the present invention, a text processing apparatus comprises a keyboard for entering text, a text buffer for storing text consisting of symbolic and control characters in text data stream form, keystroke processing and editing means for receiving keystroke signals from said keyboard, and a display for displaying text, is characterized in that said apparatus further comprises direct formatting means for reading the contents of said text buffer and displaying said symbolic characters on said display in accordance with control characters within said data stream, said keystroke processing and editing means being so arranged as to process each keystroke signal as it is received from said keyboard and to edit the stored text data stream in accordance with the received keystroke signal.

3

The invention will now be particularly described, with reference to the accompanying drawings, in which:-

Figure 1 is a block diagram showing the major data flow of the aforementioned IBM 3730 Distributed Office Communication System;

Figure 2 is a block diagram showing the present invention;

Figure 3 serves to illustrate the conceptual difference between Figures 1 and 2; and

Figure 4 is a block diagram showing a preferred embodiment of the invention;

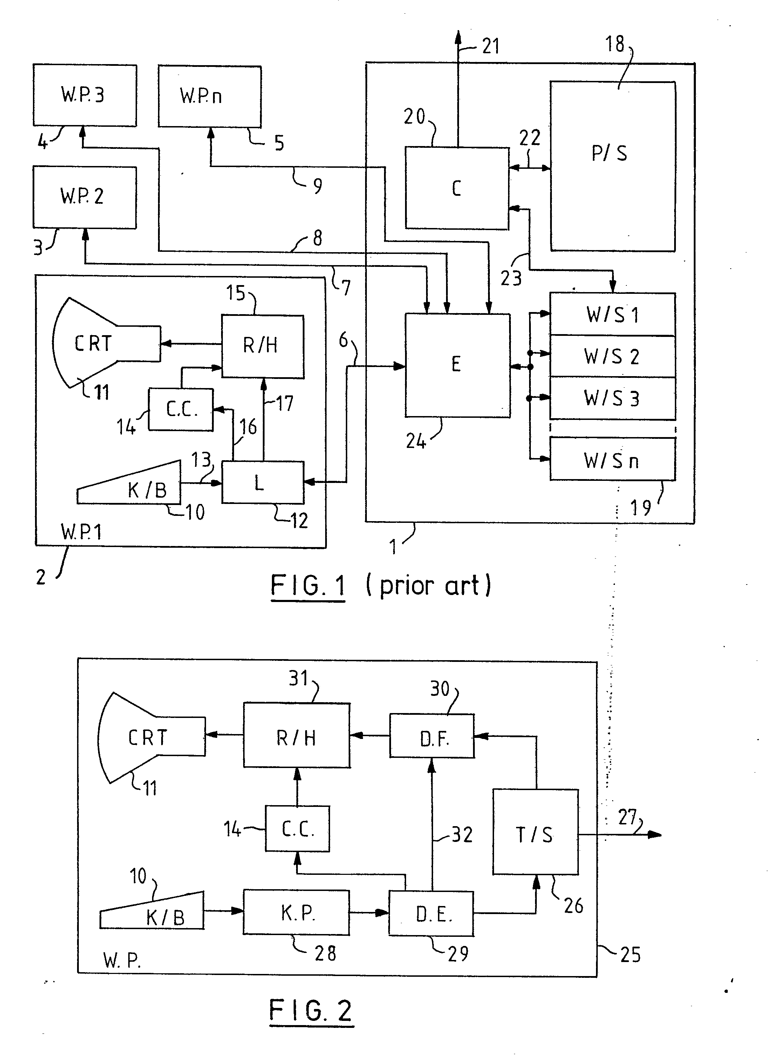

Figure 1 shows some of the parts of the aforementioned IBM 3730 system. A controller or minicomputer 1 has a number of word processing terminals (WP1 to WPn) 2 to 5 connected thereto by means of cables 6 to 9 respectively. Each terminal, exemplified by terminal 2, includes a keyboard 10 for entering text and commands and a CRT display 11 on which text can be displayed. Logic 12 controls the flow of data in and out of the terminal along cable 6, decodes signals received from keyboard 10 along cable 13, and controls cursor control 14 and refresh hardware 15 along lines 16 and 17 respectively.

The controller 1 contains permanent storage 18 and working storage 19 for storing documents. In the 3730 system this storage 18 and 19 is in the form of magnetic disc storage. Documents are stored in permanent storage 18 in unformatted, unmapped form, in other words as a text data stream. Documents being edited are held in working storage

4

19 in areas reserved to a particular operator - normally but not necessarily to a particular terminal. Control logic 20 controls the flow of data to and from permanent storage 18 from and to a remote processor (not shown) over communications link 21. As documents are moved from permanent storage 18 to working storage 19 over lines 22 and 23, they are formatted within the control logic 20: documents moved from working storage 19 to permanent storage 18 will be de-formatted in control logic 20. An editor 24 within the controller 1 edits documents stored in working storage 19 in accordance with text and commands entered by the operator. However, as indicated above this editing is done only periodically and not as each keystroke is entered.

It will be appreciated that Figure 1 is a simplified block diagram whose purpose is to explain how documents are created and changed. Assume that an operator wishes to create a new document. As text is keyed on the keyboard, it will be entered into a refresh or message buffer within the refresh hardware 15. Characters within this refresh buffer will be displayed on the CRT display 11. Every time the operator enters a character, it will appear on the screen 11 at a position determined by the position of the cursor. Periodically, the operator will cause the text contained in the refresh buffer to be entered into the assigned working storage 19. After the document has been created in working storage, it is stored in permanent storage by means of a store command and the operator can then create another document in the free space created in working storage. The document in permanent storage can be sent as a text data stream to a printer (not shown) for printing or over the communication link 21 to a remote location for subsequent storage in an archive store, printing on a remote printer, or display on a remote display. It will be evident that during the document creation process, there will normally be two
versions of the document. The most up-to-date version will
be in formatted mapped form in the refresh buffer within the
terminal 2 with a less up-to-date version stored in formatted
unmapped form in working storage.

The situation will be more complicated during the
editing of an existing document. Suppose that an existing
document is fetched from an archive store or is received from
a remote processor and is placed in permanent storage 18. It
will be in unformatted, unmapped form consisting of a stream
of text characters and text commands, for example new paragraph, new line, temporary left margin, etc. Under control
of the control logic 20, the document will be formatted,
remaining in unmapped form, and stored in the assigned region
of working storage 19. The part of the document that is to
be displayed will next be mapped into the refresh buffer
within the refresh hardware 15. After editing the displayed
text, the updated part of the document will be stored back in
working storage 19. The operator can then view and edit
another part of the document. Finally, when the complete
document has been edited, it can be re-stored in permanent
storage 18. It will be appreciated that at any one time,
there can be three different versions of the document, the
most up-to-date in the refresh buffer, the next most
up-to-date in working storage 19 and the least up-to-date in
permanent storage 18: furthermore each of these versions
will be of different format.

Figure 2 illustrates the present invention. A word processing terminal 25 includes a keyboard 10 for entering text
and commands, a CRT display 11 for displaying text, and a
text store 26 for storing a document. In accordance with the
present invention, the text store is a random access memory in which the document, or an editable part of the document, is stored as a text data stream of text characters and commands, that is the document is unformatted and unmapped. This text data stream can be transmitted to or recieved from a using device, for example a remote system or archive store, as a text data stream along communication link 27. A keystroke processor 28 receives keystrokes from the keyboard 10, decodes/interprets them and transmits decoded characters and text commands to a direct editor 29. The editor 29 directly modifies the document stored in the text store 26 after each keystroke so that the document stored in the text store 26 is always up-to-date.

Also included within the terminal 25 is a direct formatter 30 whose purpose is to read from the text store 26 the data stream relating to that part of the document which is to be dipslayed and to format and map it into the display hardware 31 of the display. Where the display is a cathode ray tube display, this display hardware 31 will include a refresh buffer. It will be appreciated that where the display device is such as not to require refresh, for example a gas panel display, the display hardware will not include a refresh buffer. The position of the cursor on the display screen is controlled by cursor control 14.

Any changes to the document made by the operator at the keyboard are made by the editor 29 to the data stream stored in the text store 26 before these changes are reflected on the screen 11. To this end the editor 29 signals the formatter 30 on line 32 that the updated document can be written into the display hardware 31 to drive the display screen 11. In Figure 2, the keystroke processor 28, editor 29 and direct formatter 30 are shown as separate entities. Those skilled in the art will appreciate that they could be formed as three different functions on a single microprocessor or a separate
microprocessor may be dedicated to each function. The text
store 26 may be constituted by real storage, that is a large
random access memory or it may be constituted by a virtual
memory. The form of the text store does not form part of the
present invention so it will not be described. Our copending
Patent Application entitled "Virtual Memory Terminal" filed
on the same day as the present application contains, inter
alia, a full description of a virtual memory storage
manager: the terminal includes a relatively small random
access memory linked to a relatively large backing store
comprised, for example, by a magnetic disc or diskette or a
magnetic bubble store. This could be a possible implementation of the text store 26.

In summary, keystrokes which add, delete or modify the
text are applied directly to the text data stream in the text
store 26 by the editor 29. To show these changes on the
screen 11, the direct formatter re-maps the whole, or part,
as required, of the screen from the modified text data stream
in store 26. This sequence of operations can be executed
sufficiently fast to appear substantially instantaneous to an
operator. Cursor positioning is controlled by the editor 29
as it processes the cursor control keystrokes. It maintains
and controls both the logical cursor position within the
unformatted text stream in the text store 26 and the viewed
cursor on the screen 11. This allows the viewed cursor to be
moved into all areas of the displayed image whilst maintaining the correct relationship with the text stream. When
all editing is complete, a store command can be used to
transmit the modified document in the text store 26 along
line 27 into an external store, to a printer, or to another
text processing system.

8

In the arrangement described with reference to Figure 2, the formatting and editing processes are separate and each operates in one direction only. The formatter 30 reads the unformatted text data stream and sends mapped data to the display. The editor 29 processes keystrokes and modifies the stored text stream. The display hardware 31 simply presents the image on the screen and moves the cursor as commanded by cursor control 14: it does not include any editing or formatting functions.

These simplifications result in less and easier maintenance giving lower service costs, the ability to change editing functions more easily, and more consistent and dependable performance as seen by the operator. Because the formatting process is separate and asynchronous, it can be interrupted to allow the processing of each keystroke as it occurs. This avoids the need to stack keystrokes, giving good human factors. Since the formatter 30 acts directly on the text stream and only formats that part which is to be viewed, unnecessary conversions and processing of intermediate text forms are eliminated.

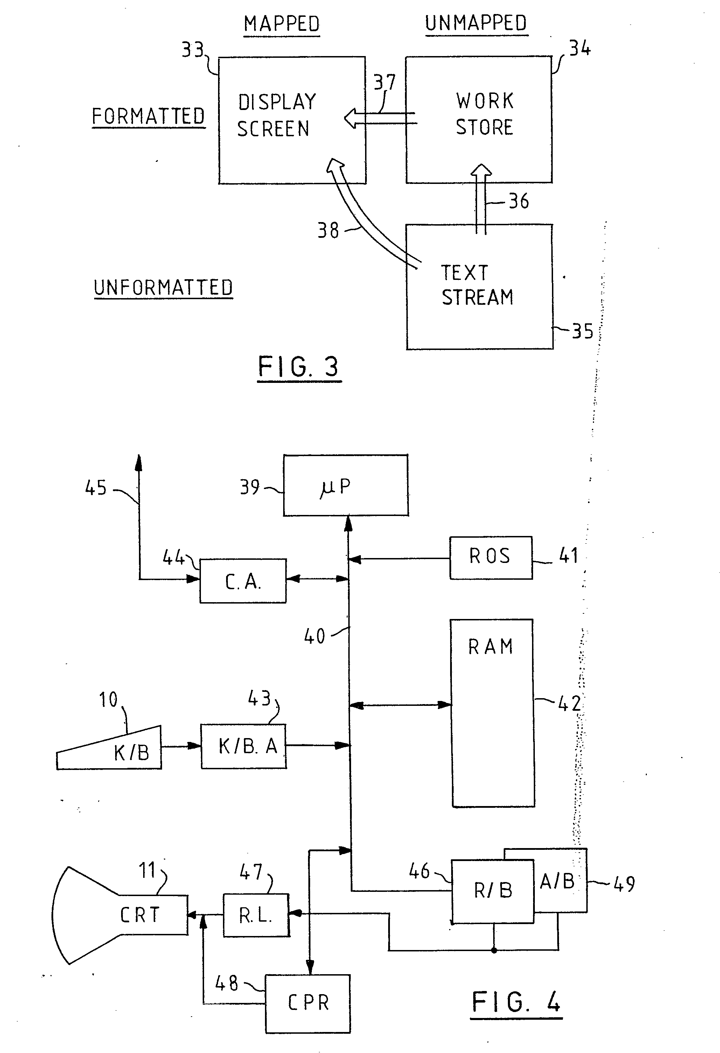

Figure 3 shows the fundamental difference between the present invention and the prior art as exemplified by the IBM 3730 system. Block 33 represents text which is formatted and mapped, block 34 represents text which is formatted but unmapped, and block 35 represents text which is unformatted and unmapped. Thus block 33 corresponds to text displayed on the screen 11, Figures 1 and 2, (and within the associated refresh buffer) and block 35 corresponds to text stored in permanent storage 18, Figure 1 and in text store 27, Figure 2. Block 34 corresponds to text stored in working storage 19, Figure 1: there is no corresponding text in Figure 2. Arrows 36 and 37 represent the separate formatting and mapping processes of the prior art of Figure 1 and arrow 38 represents the direct formatting process of the present invention.

In Figure 2, keystroke processor 28, editor 29 and formatter 30 are shown as separate entities. However those skilled in the art will appreciate that their functions could be performed by a single microprocessor. Figure 4 shows such an embodiment using a microprocessor 39, constituted, for example, by a Motorola M68000 microprocessor, an Intel 8086 microprocessor, or a Zilog Z8000 microprocessor. The microprocessor 39 has a system bus 40 associated therewith consisting of data, address and interrupt signal lines. A read only store 41 contains microcode relating to basic functions of the microprocessor and loadable random access memory 42 for containing further microcode and text. The keyboard 10 is connected to the system bus 40 through a keyboard adapter 43 which adapts signals representing keystrokes for use by the microprocessor 39. A communications adapter 44 interfaces the bus 40 with the communication line 45 through which text and commands can be sent to or received from a controller or host processor, not shown. The CRT display 11 is driven from a loadable refresh buffer 46 by means of refresh logic 47. A cursor position register 48 controls the position of the viewed cursor on the display 11. Associated with the refresh buffer 46 is an attribute buffer 49.

Although the refresh and attribute buffers 46 and 49 are shown as separate entities, they can in fact be constituted by dedicated parts of the random access memory 42. Although it is preferred that refresh of the display 11 is by means of separate refresh logic 47, those skilled in the art will recognise that if the microprocessor 39 is powerful and fast enough, it can be used to refresh the display 11 from the refresh buffer 46 and attribute buffer 49. The read only store 41, random access memory 42, keyboard and communications adapters 43 and 44 are all known per se and need not be described further: the IBM 8775 display terminal includes such units.

Similarly the use of a refresh buffer 46, refresh logic 47 and attribute buffer 49 is known per se and is used in the IBM 3278, 3279 and 8775 display stations. Briefly, however, each byte in the refresh buffer 46 represents a character position on the screen and has associated therewith one or two character attribute bytes stored in the attribute buffer 49. The character attribute byte(s) determine(s) how the associated character is displayed, for example underscored, highlighted, reverse video etc. Since most text will be displayed 'not bright up' and 'not underscored', it is preferred that the character attribute bytes be set to this default before formatting. Contained within the refresh buffer 46 are field attribute bytes which determine the attributes of fields of characters, for example, protected fields, non-display fields, etc. To refresh the CRT display, the refresh logic 47 periodically reads bytes from the buffers 46 and 49 and by using a character generator, not shown, derives video information which is supplied to the video circuits (not shown) of the CRT.

As mentioned above, the position of the viewed cursor (as opposed to the logical cursor in the stored text data stream) is controlled by the cursor position register 48 which has loaded into it the cursor position determined by the microprocessor 39.

11

Operation of the embodiment shown in Figure 4 is as
follows.  A document to be edited is stored as a text stream
including text characters and text commands in random access
memory 42.  That portion of the document which is to be displayed is formatted and mapped by the microprocessor 39 into
the refresh buffer 46 together with the appropriate attribute
bytes in attribute buffer 49.  As the operator enters,
deletes or alters text at the keyboard 10, the microprocessor
39 interprets these keystrokes and makes appropriate changes
to the text stream in the memory 42.  When the microprocessor
has finished editing the text stream in memory 42, the microprocessor formats and maps the modified text into the refresh
buffer 46 (together with any attribute bytes) and the updated
text will be displayed on the display 11 during the next
refresh cycle.

It will be appreciated that a change to that part of the
text which is displayed may cause changes to parts of the
document which are not displayed.  It is an essential feature
of this invention that all changes to the text stream in the
memory 24 are made before there is any updating of the
refresh buffer 46.  This ensures that the most up-to-date
version of the document is that contained within memory 42.
The microprocessor must interpret text commands outside the
viewed text which affect that viewed text so that it can
format the viewed text correctly.  As indicated above, the
text stream within the memory 42 may be stored in blocks of
fixed or variable length.  Thus text could be stored as
sentences or paragraphs in variable length blocks or segments.

Our co-pending European Patent Application entitled
"Text Processing Apparatus with Editing of Stored Document at
Each Keystroke" filed on the same day as the present

12

application describes in some detail a particularly efficient method of storing text.

Since the mechanism by which the text is stored does not form part of the present invention, no further description of the storage of the text stream will be given. It is believed that those of ordinary skill in the art will be able to design the appropriate code to control the microprocessor 39, Figure 4, to operate as described. It is preferred that the microprocessor is controlled to operate as follows. Various tasks are assigned to one of five execution levels of different priority, with a priority mechnism which, following an input/output interrupt, or task quiescing on completion, passes control to the active task of highest priority. These tasks and their levels are, in order of priority:-

Level 1 User interface task

Level 2 Cursor tracking task
   Editor task
   Paginator task
   Hyphenator task

Level 3 Display presentation task (formatting)

Level 4 Propagator task
   Get task

Level 5 Store task where there is more than one task to a level, the tasks are
mutually exclusive.

Access by the microprocessor 39 to the stored document
is assisted by a set of State Vectors which identify specific
character locations within the document and list the values
of control and mode information (for example width) at that
point.  A full State Vector (SV) contains the following:-

1.    document pointer consisting of identification of
      storage block containing part of document and byte
      offset within storage block,

2.    pointer to page index entry preceding this point,

3.    controls consisting of temporary margin stack, pointer
      to appropriate tabrack definition, width, page depth,
      column left margin position, pointer to current page
      heading definition, pointer to current page footing
      definition, and pointer to start of current 'keep',

4.    mode including right-justify mode, centering mode,
      column text mode, tabular mode, heading or footing
      definition, block underscore or double-underscore
      active, block highlight / doublestrike active.

The following full State Vectors are maintained for general
use by any text task:-

      DSSV      (Document Start SV)
                start of document and default controls and mode

      SSSV      (Screen Start SV)
                start of the portion of document to be displayed

14

CLSV      (Cursor Line SV)
          start of the line containing the cursor

Each text task also maintains one or more Working Store
Vectors, for example:-

    EWSV      (Editor)
    DWSV      (Display Presentation Formatter)
    PWSV      (Propagator)
    GWSV      (Get)

In addition to these full State Vectors which totally
define the text controls and mode at certain positions within
the document, a chain of Page Index Entries (PIE's) is maintained.  There is one PIE for each page of the document and
they are forward and reverse chained.  (Where a document
contains lengthy unpaginated text additional PIE's may be
included on a number-of-characters basis.  These pseudo-PIEs
are flagged to distinguish them from real PIE's.)

The PIE chain is built on GET and on repagination, and
pseudo-PIE's may be added or inserted by editing.  A PIE
contains forward and backward chaining pointers, the page
number, the 'pseudo' flag, a pointer to page start in the
document and a list of control and mode changes since
preceding PIE, or a pointer to a Page Index State Vector.

One reason for choosing to subdivide the working
document only at page boundaries is that page boundaries
remain invariant during editing and change only upon
repagination, which is an explicit 'whole-document' process
and can conveniently regenerate the PIE chain.  Thus changes
to the PIE chain are infrequent.  Another reason is that page
boundaries occur naturally at reasonable intervals throughout

15

most documents and provide subdivision into regular units independent of total document size.

The User Interface Task is the highest priority text task and is in overall control of text processing within the terminal. It does not itself examine or modify the document content in any way. It is initiated either by keyboard I/O interrupts or by completion of a lower priority task. This task executes the keystroke handling process, command interface process, and error presentation and acknowledgement process. It may initiate the CURSOR TRACKING TASK, EDITOR TASK, PAGINATOR TASK, HYPHENATION TASK, GET TASK, or STORE TASK.

The Cursor Tracking Task is initiated by the User Interface task for Cursor-movement-only keystrokes. It executes the Cursor Tracking process. Note that this task is concerned only with the user's explicit cursor-only operations; cursor movement resulting from editing is carried out by the Editor task.

The Editor Task is responsible for all changes to the document within the terminal with the exception of the explicit hyphenation, pagination, and line-end marking operations which are carried out by separate tasks on the same priority level. This task executes the Character Editor process, Block Editor process and Cursor resolution process which in turn make use of the Formatter process. The Editor task can initiate both the Presentation task (to update the display screen) and the Propagator task (to check for resulting erros later in the document) once its updating of the document is complete. The Presentation task, having higher priority, will execute first.

16

The Paginator Task is initiated by the User Interface task in response to an explicit user request to repaginate the whole document.  It consists of the Paginator process, which uses the Formatter process.

The Hyphenator Task accepts both manual hyphenation decisions from the user and dictionary references and is required to insert syllable hyphens in the first instance. Once inserted the hyphenation-point information should not be lost through reformatting.

The Display Presentation Task is initiated by the Editor Task and executes the Formatter process in the Display mode. It will be initiated when the Editor is first invoked, if the SSSV changes (e.g. as a result of scrolling) or if the document content is changed.  In the first two cases formatting will be initiated under control of the Screen Start State Vector and will generate a whole screen partition, whereas in the third case formatting will normally be initiated under control of the Cursor Line State Vector and may generate either one partition line or the balance of the partition from the cursor line down.  When operating in Display form the Formatter process is concerned with the definition of the screen partition as well as the stored document.  The screen partition is defined in terms of Refresh Buffer start address, Partition upper left coordinates (character cell), Partition Width and Depth (note that partition width may be less than current document width), and the selection of character set for that partition.

The Propagator Task is initiated by the Editor when a change made at the current position in the document may affect the validity of later parts (e.g. conflicting temporary left margins and Tabracks), and to check for such

17

errors it is necessary to Blind Format the rest of the document. This checking is separated from the Editor to allow
the latter to respond immediately to further keystrokes and
to allow the Display formatter to show the immediate context
of the change made by the Editor on the screen. This task
does not alter the document in any way.

The Formatter is a single process which can run in
either of two fashions: DISPLAY or BLIND. The DISPLAY
Formatter is executed asynchronously as the Display
Presentation task and writes formatted lines into the Refresh
Buffer. The BLIND Formatter is called by a number of other
tasks (e.g. Cursor Tracking, Editor, Propagator) as a synchronous process to resolve the text stream into lines and
predict cursor position, line endings, etc and does not
produce any formatted text but only positional information
which it returns to its caller. The process is re-entrant
between all tasks and levels. The formatter is structured as
a set of simple formatting loops, one for each of the fundamental formatting modes, that is normal (adjust), right-
justify, centering, tabular, and column text. Each of these
loops deals with the formatting of ordinary words, and calls
common special-case routines for more complex formatting.

The Cursor tracking process responds to horizontal
cursor move keystrokes by moving the Logical cursor position
incrementally within the document and then using the Blind
Formatter (on a single line or in some cases two) to resolve
the resulting position within a line. It then updates the
Physical cursor position without otherwise affecting the
Refresh Buffer. Vertical cursor movements are handled by
Blind Formatting the current cursor line and either the line
after it or the part of the screen above giving the desired
movement. The Physical cursor position is then resolved as

18

above. In this way cursor tracking can be made faster than character insert/delete.

The Paginator process uses the Blind Formatter to determine the line and page layout implied by the current document text and controls, ignoring previously system-determined lines and page boundaries. It records the new page boundaries in the document as commands, and these page boundaries will remain in effect until the document is repaginated. It will at the same time discard the existing PIE chain and build a new one. Optionally, it can also record the current line boundaries in the document. These recorded line boundaries will have no effect on the Editor or Formatter but may be required when the document is processed outside the text terminal.

The Propagator process uses the Blind Formatter process to check the manner in which the balance of the document beyond the point of change now formats. It does not alter the document in any way and in particular does not alter line endings. If a format error (such as an invalid Tab) is found, an error record is built including nature of error(s) and severity, character location in document at which detected, and editor operation(s) causing this propagation pass, and, optionally, the suggested action. Once propagation is complete the error record list is available to the User Interface task which is notified of the outcome. The propagation process will continue to the end of the document or until it is found that the PWSV matches the cumulative state vector at a PIE, showing that the effect of the original change cannot propagate further. However propagation may be terminated and reinitiated by the Editor if a second change to the document requires propagation before the propagation of the first is complete. If this happens the second pass of the propagator starts from the earliest modified location in the document, carries with it information regarding both the latest and the previous editing operations, and does not start checking for PWSV/PIE match until past the point where the previous incomplete propagator pass(es) was (were) interrupted and terminated. While propagation is in progress the Editor cannot operate on a later part of the document to which propagation has not yet reached, and the Display Formatter cannot display it. To enforce this interlock these tasks both check the current state of propagation by inspecting the PWSV.

What has been described is a word processing apparatus in which a document is edited directly in its text data stream form while maintaining a screen image by continually formatting the relevant part of that stream onto the screen. The text is transformed directly from its unformatted state into a formatted and mapped screen image. Direct formatting completely eliminates the reverse transformations (entering the keystrokes into the formatted and mapped screen image, merging the screen image back into the formatted working storage and later converting formatted working storage back into serial form) of the prior art.

An important advantage of direct formatting is the separation and individual definition of the editing and formatting processes, which clarifies the code structure. These two processes are separate but operate together as a coupled system with defined interdependencies. Thus the editor initiates the presentation formatting task to write the screen image, and also uses the formatter during the editing process to determine line endings etc, but the output of the presentation formatter to the screen has no influence on the operation of the editor (except indirectly through the human operator).

20

Although the text stream can be in any convenient code form, it is preferred that it is in the IBM System Network Architecture Character Set (SCS) since this is commonly used to communicate between different types of text processing apparatus. The manual entitled IBM 3730 Distributed Office Communication System: Application Programmer's Reference (GA33-3031-1, Copyright 1980 published by International Business Machines Corporation describes the SCS data stream in more detail. By using the SCS data stream, complicated code conversion procedures are avoided each time a document is received or transmitted by the word processing apparatus.

1

CLAIMS:-

1. A text processing apparatus comprising a keyboard for entering text, a text buffer for storing text consisting of symbolic and control characters in text data stream form, keystroke processing and editing means for receiving keystroke signals from said keyboard, and a display for displaying text, characterized in that said apparatus further comprises direct formatting means for reading the contents of said text buffer and displaying symbolic characters on said display in accordance with control characters within said data stream, said keystroke processing and editing means being so arranged as to process each keystroke signal as it is received from said keyboard and to edit the stored text data stream in accordance with the received keystroke signal.

2. Apparatus as claimed in claim 1, characterized in that said keystroke processing and editing means and said direct formatting means are constituted by a microprocessor, the keystroke processing and editing tasks having a higher priority than the formatting task.

3. Apparatus as claimed in claim 2, characterized in that said higher priority is provided by means for interrupting said formatting means to allow processing of keystrokes.

4. Apparatus as claimed in any preceding claim, characterized in that said direct formatting means is adapted to re-format the displayed text whenever it receives a signal from said keystroke processing and editing means that the stored text stram has been modified.

5. Apparatus as claimed in any preceding claim, characterized in that it comprises a cursor control for controlling the position of a cursor on the display, said cursor control being controlled by said keystroke processing editing means independently of said formatting means.

6.    Apparatus as claimed in any preceding claim, characterized in that said stored document is stored in a data stream form that can be communicated on a communication link without code conversion.

1/2

0043392

FIG. 1 (prior art)

FIG. 2

0043392

MAPPED                    UNMAPPED

FORMATTED

33 ┌─────────┐      37  ┌─────────┐ 34
   │ DISPLAY │ ←─────── │  WORK   │
   │ SCREEN  │          │  STORE  │
   └─────────┘          └─────────┘
                              ↑
                         36 ─┤
         38                  │
UNFORMATTED           ┌─────────┐
                      │  TEXT   │
                      │ STREAM  │
                      └─────────┘ 35

FIG. 3

          39 ┌─────────┐
45            │   μP    │
              └─────────┘
44 ┌─────┐                    ┌─────┐
   │ C.A.│ ←──────────────────│ ROS │ 41
   └─────┘                    └─────┘

        40

                              ┌─────────┐
                              │         │
                              │   RAM   │
10 ┌─────┐   43 ┌───────┐     │         │ 42
   │ K/B │ ───→ │ K/B.A │     └─────────┘
   └─────┘      └───────┘

                         46 ┌─────┐ A/B
11 ┌─────┐ 47 ┌─────┐        │ R/B │     49
   │ CRT │ ←─ │ R.L.│        └─────┘
   └─────┘    └─────┘

        48 ┌─────┐
           │ CPR │        FIG. 4
           └─────┘

| Category | Citation of document with indication, where appropriate, of relevant passages | Relevant to claim |
|---|---|---|
| | US - A - 4 040 024 (COWE et al.)<br><br>* column 2, line 4 - column 6, line 28; figures 1-5 * | 1-6 |
| | US - A - 4 110 823 (CRONSHAW et al)<br><br>* column 2, line 39 - column 3, line 12; column 3, lines 44-65; column 5, lines 64-67; column 9, lines 18-45; column 15, lines 4-67; figures 1,4, 10 * | 1-3,6 |
| A | US - A - 4 198 685 (CORWIN et al.)<br><br>* column 3, lines 43-68; column 6, lines 10-39; column 6, line 67 - column 7, line 7; column 16, line 48 - column 21, line 38; figures 1,2,6,7,14, 18 * | 1 |
| A | IBM TECHNICAL DISCLOSURE BULLETIN, volume 13, no. 5, October 1970, NEW YORK (US)<br>R.L. McCONNELL et al. "Keying buffer in a visual editing system" pages 1353, 1354<br><br>* the whole article * | 1 |

**DOCUMENTS CONSIDERED TO BE RELEVANT**

**CLASSIFICATION OF THE APPLICATION (Int. Cl.³)**

G 06 F 15/20

**TECHNICAL FIELDS SEARCHED (Int. Cl.³)**

G 06 F 15/20
15/40
3/153

**CATEGORY OF CITED DOCUMENTS**

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search | Date of completion of the search | Examiner |
|---|---|---|
| The Hague | 18-03-1981 | HARRIS |

EPO Form 1503.1  06.78